# EUROPEAN PATENT APPLICATION

(11) **EP 1 880 886 A1**
(43) Date of publication of application: **23.01.2008**
(21) Application number: 06745793.7
(22) Date of filing: 27.04.2006
(51) Int. Cl.: B60J 7/02, B29C 45/14, B60J 10/12, B29K 75/00, B29K 105/04, B29L 31/30

(54) **ROOF PANEL FOR VEHICLE**

(30) Priority: 27.04.2005 JP 2005129767
(71) Applicant: Webasto Japan Co., Ltd., Hiroshima 739-0038 (JP)
(72) Inventor: TAKISHIMA, Shigeki, HIROSHIMA UNIVERSITY, Higashihiroshima-shi Hiroshima 739-0046 (JP); HOSODA, Joji, WEBASTO JAPAN CO., LTD., Higashihiroshima-shi Hiroshima 739-0038 (JP)
(74) Representative: Herrmann, Uwe
(86) International application number: PCT/JP2006/308910
(87) International publication number: WO 2006/118223

(57) **Abstract**

A carbonic acid gas or a nitrogen gas is dissolved into a polyurethane material. The thus prepare polyurethane material is injected into a cavity of a mold which is formed around the periphery of a glass panel 2 to mold integrally with the glass panel 2 a resin molded member 3 made of a foam of the polyurethane. Each amount of the carbonic acid gas and the nitrogen gas dissolved in the polyurethane material is adjusted so as to set the specific gravity of the resin molded member 3 to fall, in the range between 0.60 and 0.90, both inclusive.

## Description

### Technical Field

The present invention relates to a roof panel provided so as to cover the upper part of a cabin of a vehicle.

### Background Art

Conventionally, as disclosed in Patent Document 1, for example, an opening is formed in a roof and a roof panel for closing the opening is provided to open/close the opening for the purpose of improving the comfortableness and the like in the cabin. The roof panel in Patent Document 1 includes a first member formed of a glass panel extending to cover the opening and a resin-made second member integrally formed with the first member so as to surround the periphery of the first member.
Patent Document 1: Japanese Patent Application Laid Open Publication No. 11-198660

### Summary of the Invention

### Problems that the Invention is to Solve

Provision of such an additional roof panel to a vehicle as in Patent Document 1, however, increases the weight of the vehicle inevitably. For reducing the increase in weight of the vehicle as far as possible, a lightweight roof panel is demanded. For satisfying this demand, the first member of the roof panel may be thinned. The first member, which serves as a part of the outer panel of the vehicle when the opening is closed, must be, therefore, rigid enough not to be readily bent in vehicle running and the like and is required to have sound insulating property when the opening is closed. Satisfaction of such requirements limits thinning of the first member. In other words, it is difficult to reduce the weight of the roof panel by thinning the first member.

The present invention has been made in view of the foregoing and has its object of maintaining, in view of the fact that a rigid first member serving as an outer panel is formed integrally with a second member in a vehicle roof panel, the form of the second member while reducing the weight thereof to reduce the weight of the roof panel by providing some contrivance on a resin material composing the second member.

### Means for Solving the Problems

To attain the above object, in the present invention, the second member is made of a foam of thermosetting resin, and the specific gravity of the foam is set in the range between 55 % and 90 %, both inclusive, of the specific gravity of it in a non-foamy state.

Specifically, a vehicle roof panel in accordance with a first aspect of the present invention includes: a panel-shaped first member formed so as to cover an upper part of a cabin of a vehicle and serving as an outer panel of the vehicle; and a second member made of a foam of thermosetting resin and molded integrally with the first member, wherein a specific gravity of the second member is set in a range between 55 % and 90 %, both inclusive, of a specific gravity of the thermosetting resin, which composes the second member, in a non-foamy state.

In the above arrangement, the specific gravity of the second member is set equal to or smaller than 90 % of the specific gravity of the thermosetting resin in the non-foamy state, which attains at least nearly 10 % reduction in weight of the second member when compared with the weight of the thermosetting resin in the non-foamy state. As the specific gravity of the second member made of the foam is reduced, the air bubble content of the second member increases to lower the mechanical strength of the second member. Wherein, the second member is molded integrally with the first member made of the thermosetting resin having high mechanical strength, and the air bubble content is set so that the specific gravity of the second member is equal to or larger than 55 % of the specific gravity of the thermosetting resin in the non-foamy state. Hence, the form of the second member is maintained.

Referring to a second aspect of the present invention, in the first aspect, the thermosetting resin is polyurethane, and the specific gravity of the second member is set within a range between 0.60 and 0.90, both inclusive.

In the above arrangement, the second member is made of the foam of polyurethane having high whether resistance, thereby suppressing aging of the second member. Wherein, the specific gravity of polyurethane in the non-foamy state is approximately 1.05. Since the specific gravity of the foam of polyurethane composing the second member is 0.90 or smaller, 10 % or more reduction in weight of the second member can be attained when compared with a case using polyurethane in the non-foamy state. Further, setting of the specific gravity of the second member at 0.60 or larger enables the form of the second member to be maintained.

Referring to a third aspect of the present invention, in the first aspect, the second member is molded so as to surround the periphery of the first member, and a sealing part receiving portion in which a sealing member in contact with the periphery of an opening formed in a roof of the vehicle is fitted is formed in the second member.

In the above arrangement, the sealing member that seals the periphery of the opening of the roof and the periphery of the roof panel is held at the roof panel with it fitted in the sealing member receiving portion of the second member. This state, combined with the maintained form of the second member as described above, suppresses displacement of the sealing member from a predetermined position.

Referring to a fourth aspect of the present invention, in the third aspect, the sealing member receiving portion is molded by a mold for molding the second member.

According to the above arrangement, the sealing member receiving portion can be molded simultaneously with molding of the second member.

Referring to a fifth aspect of the present invention, the vehicle roof panel in the first aspect further includes a support member supporting the first member to the vehicle and arranged below the first member, a part of the support member being insert-molded in the first member.

In the above arrangement, the support member is integrated with the first member through the second member in molding the second member. This eliminates the need for components for fixing the support member to the first member and the like. Further, the support member can be fixed to the first member at the same time the second member is molded.

Referring to a sixth aspect of the present invention, the vehicle roof panel in the first aspect further includes a support member supporting the first member to the vehicle and arranged below the first member, wherein a receiving portion in which a part of the support member is fitted and fixed is formed in the second member.

In the above arrangement, after the second member and the support member are molded separately, a part of the support member is fitted into the receiving portion of the second member. This results in integration of the support member with the first member.

Referring to a seventh aspect of the present invention, in the first aspect, the second member is molded by reaction-injection-molding a thermosetting resin material in which at least one of a carbonic acid gas and a nitrogen gas is dissolved.

With the above arrangement, the carbonic acid gas and the nitrogen gas dissolved in the thermosetting resin material serve as foaming agents, thereby obtaining a thermosetting resin in which micro babbles are formed substantially equably.

### Effects of the Invention

In the first aspect of the present invention, the specific gravity of the second member is set equal to or smaller than 90 % of that of the thermosetting resin in the non-foamy state, thereby reducing the weight of the second member to reduce the weight of the roof panel. Reduction in weight of the roof panel improves the fuel efficiency of the vehicle to thus suppress adverse influence of the vehicle on the global environment. Further, the second member is molded integrally with the first member serving as the outer panel of the vehicle, and the specific gravity of the second member is set equal to or larger than 55 % of the specific gravity of the thermosetting resin in the non-foamy state, thereby maintaining the form of the second member.

In the second aspect of the present invention, polyurethane is used as the thermosetting resin, thereby suppressing aging of the second member. Further, the specific gravity of the second member is set within the range between 0.60 and 0.90, both inclusive, so that the form of the second member can be maintained while at the same time the weight of the roof panel can be reduced.

According to the third aspect of the present invention, the sealing member is fitted in the second member of which form is maintained, to be held at a predetermined position, so that the periphery of the opening of the roof and the periphery of the roof panel are sealed securely.

According to the fourth aspect of the present invention, the sealing member receiving portion can be formed by a mold for molding the second member, thereby omitting a step for manufacturing the roof panel.

Moreover, since the second member is made of the foam, the thermosetting resin material having excellent moldability is ready to spread to every corner of the cavity of the mold in molding, thereby improving the dimensional accuracy of the second member. As a result, the dimensional accuracy of the sealing member receiving portion is improved to eliminate the need to perform mechanical processing for attaining the accurate form of the sealing part receiving portion after the second member is molded. Hence, the processing cost and the equipment cost can be reduced.

In the fifth aspect of the present invention, the support member that supports the first member to the vehicle is insert-molded to suppress an increase in the number of components and to reduce a step for manufacturing the roof panel including the support member.

Furthermore, the second member is made of the foam, as described above, and therefore, the thermosetting resin material readily spreads between the first member and the support member in molding, thereby securely integrating the support member with the first member.

In the sixth aspect of the present invention, a part of the support member is fitted in the receiving portion of the second member to thus integrate the support member with the first member easily.

According to the seventh aspect of the present invention, the carbonic acid gas and the nitrogen gas dissolved in the thermosetting resin material serve as foaming agents to form micro babbles substantially equably in the second member, so that the mechanical strength of the second member can be made uniform entirely.

In addition, the foaming agents are dissolved in the thermosetting resin material to allow the thermosetting resin to have high flowability, so that the thermosetting resin material flows into the mold readily in molding. Accordingly, even in the case where, for example, the second member has a complicated form, the second member can be molded accurately.

### Brief Description of the Drawings

[FIG. **1**] FIG. **1** is a vertical sectional view showing in an enlarged scale the end part on the vehicle rear side of a roof panel in accordance with an embodiment.
[FIG. **2**] FIG. **2** is a vertical sectional view of the roof panel in accordance with the embodiment when viewed from a side of the vehicle.
[FIG. **3**] FIG. **3** is an illustration explaining a schematic construction of a molding apparatus.
[FIG. **4**] FIG. **4** is a view corresponding to FIG. **1** for explaining the case where a resin molded member is molded.
[FIG. **5**] FIG. **5** is a graph showing the relationship between the amount of foaming agents dissolved in a polyurethane material and the specific gravity of the resin molded member.
[FIG. **6**] FIG. **6** is a graph showing the relationship between the specific gravity and the Shore hardness of the resin molded member.

### Explanation of Reference Numerals

- **1**: roof panel
- **2**: glass panel (first member)
- 3: resin molded member (second member)
- **4**: support member
- **8**: weather strip (sealing member)
- **9**: trench
- **R**: roof
- **Y**: opening

### Best Mode for Carrying out the Invention

An embodiment of the present invention will be described below in detail with reference to the accompanying drawings. It should be noted that the following preferred embodiment describes a mere essential example and does not intend to limit the present invention, applicable subjects thereof, and use thereof.

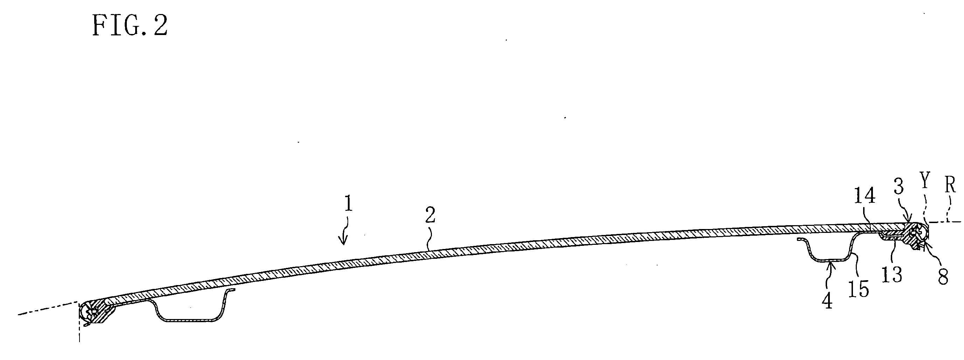

FIG. **2** shows a vehicle roof panel **1** in accordance with one embodiment of the present invention. The roof panel **1** is provided for opening/closing a substantially rectangular opening **Y** formed in a roof **R** of a vehicle. The roof panel **1** includes a glass panel **2** as a first member extending so as to cover the upper part of the cabin, a resin molded member **3** as a second member provided so as to surround the periphery of the glass panel **2**, and a support member **4** arranged below the glass panel **2**.

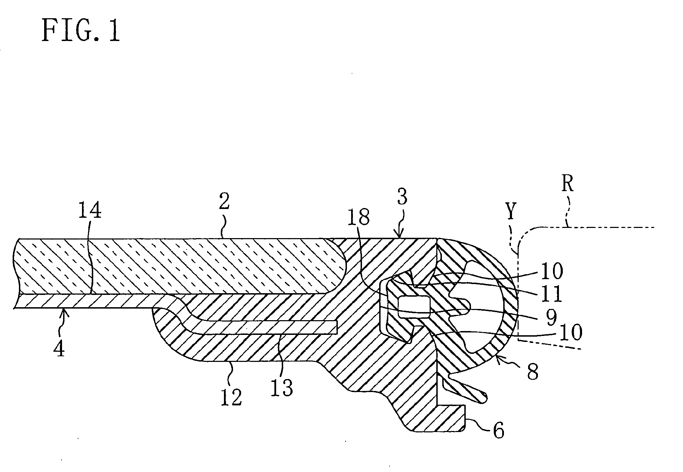

The glass panel **2** is made of a glass material generally used for window glass of a vehicle and the like and has rigidity high enough not to be bent and be deformed when fitted to a vehicle. The upper face of the glass panel **2** is formed so as to be aligned substantially with the upper face of the roof **R** when the glass panel **2** is fitted to the vehicle. The edge of the glass panel **2** has an arc shape in vertical section, as shown in FIG. **1**.

The resin molded member **3** is made of a foam of polyurethane and is molded integrally with the glass panel **2** by a molding method described later. Polyurethane, which has high weather resistance among thermosetting resins, suppresses aging of the roof panel **1**

The resin molded member **3** continues annularly around the entire periphery of the glass panel **2** so as to surround the periphery of the glass panel **2**. The upper face of the resin molded member **3** is aligned substantially with the upper face of the glass panel **2** and protrudes outward by a predetermined length from the periphery of the glass panel **2**. A protruding ridge **6** protruding outward is formed at the lower end of the outer peripheral face of the resin molded member **3**. The protruding ridge **6** continues around the entire periphery of the resin molded member **3**

A trench **9** is opened at a part upper than the protruding ridge **6** of the resin molded member **3** for receiving a weather strip **8** as a sealing member. A pair of inclined faces **10** are formed in the vicinity of the trench 9 at the outer peripheral face of the resin molded member **3** so as to be close to the bottom of the trench **9** as they go toward the trench **9**. A trench expanding portion **11** expanding in the widthwise direction of the trench **9**, that is, the vertical direction of the roof panel **1** is formed at a part of the resin molded member **3** which is located at the bottom part of the trench **9**. The inner peripheral part of the resin molded member **3** forms a thin portion **12** of which vertical dimension is smaller than that of the outer peripheral part thereof. The thin portion **12** adheres to the lower face of the glass panel **2** and extends inward of the glass panel **2**.

The support member **4** is formed of a metal plate in a frame shape corresponding to the outer peripheral part of the glass panel **2**. The outer peripheral part of the support member **4** forms an insert portion **13** inserted in the resin molded member **3**. The insert portion **13** is formed so as to separate downward from the lower face of the glass panel **2**. A panel contact portion **14** in contact with the lower face of the glass panel **2** is formed at part of the support member **4** which is located on the inward side of the insert portion **13**. A swelling portion **15** (shown in FIG. **2**) swelling downward is formed at a part of the support member **4** which is located on the inward side of the panel contact portion **14**. Though not shown, a joint portion to be joined to a tilting and sliding mechanism provided at the vehicle is formed at the support member **4**. The joint portion supports the glass panel **2** to the vehicle.

The weather strip **8**, which is inserted in the trench **9**, is made of an elastic material, such as EPDM, or the like and forms a hallow. The weather strip **8** extends annularly and surrounds the periphery of the resin molded member **3**. An insert portion **18** is formed at the weather strip **8** so as to protrude toward the glass panel **2** to be inserted in the trench **9**. The insert portion **18** continues around the entire periphery of the weather strip **8**. The tip end part of the insert portion **18** expands in dimension in the vertical direction more than the base end thereof and is fitted in the trench expanding portion **11** in the trench **9**. The weather strip **8** is held at the resin molded member **3** with the insert portion **18** thereof inserted in the trench **9**. Namely, the trench **9** serves a sealing member receiving portion of the present invention. The sealing member receiving portion may have any form other than the trench **9**.

A molding apparatus **30** for molding the resin molded member **3** will be described next. The molding apparatus **30** is so composed to mold a polyurethane material by reaction injection molding, generally called RIM.

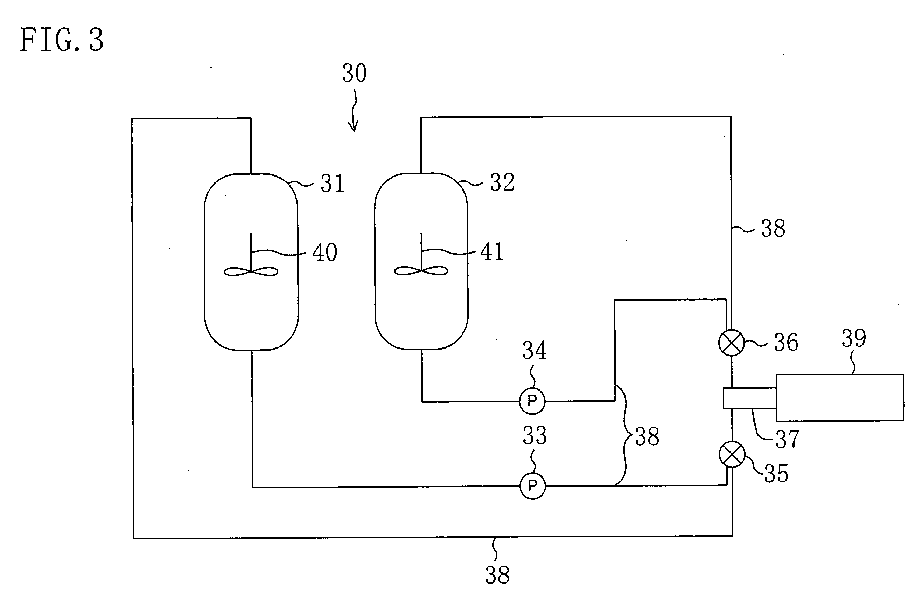

The molding apparatus **30** includes, as schematically shown in FIG. **3**, a polyol tank **31** and an isocyanate tank **32** which store polyol and isocyanate, respectively, as polyurethane materials, first and second liquid sending pump **33**, **34**, first and second switching valves **35**, **36**, a mixing head **37**, and a pipe which connects them all. In the polyol tank **31**, an agitator **40** is provided for agitating the polyol. Another agitator is provided in the isocyanate tank **32** for agitating the isocyanate.

Further, though not shown, heaters for heating the insides of the tanks **31**, **32** are provided at the polyol tank **31** and the isocyanate tank **32**, respectively. A pressurized nitrogen gas is introduced in the polyol tank **31**. Pressurized carbonic acid gas and nitrogen gas are introduced in the isocyanate tank **32**. By filling the nitrogen gas and/or the carbonic acid gas in the polyol tank **31** and the isocyanate tank **32**, air is removed from the tanks **31**, **32** to prevent moisture in the air from being mixed with the polyurethane materials. The pressures of the nitrogen gas and the carbonic acid gas respectively introduced in the polyol tank **31** and/or the isocyanate tank **32** are adjustable separately. The nitrogen gas and the carbonic acid gas serve as foaming agnets in the present invention.

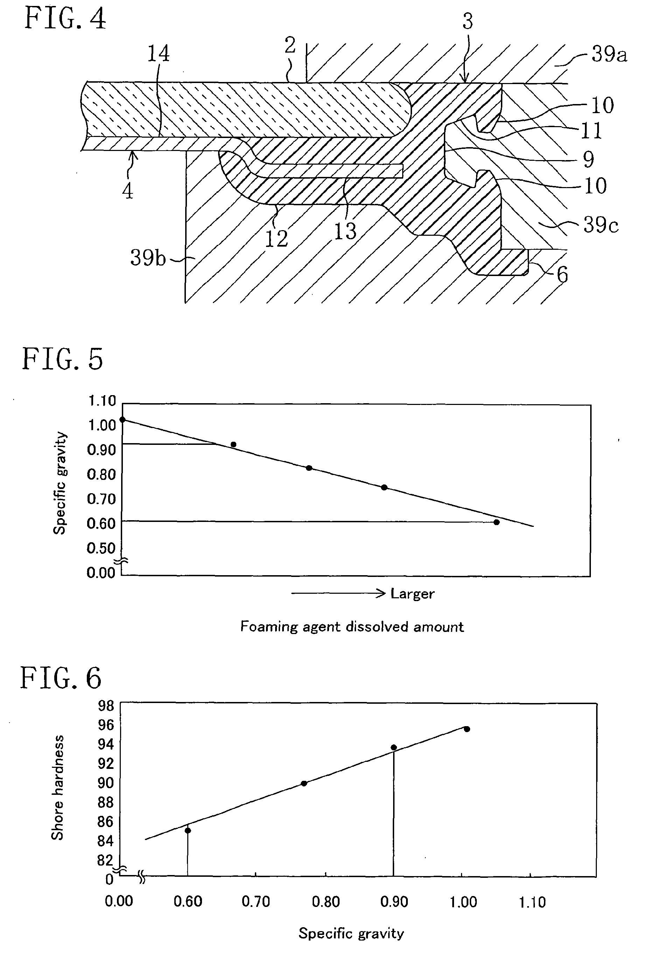

A mold **39** is arranged on the injection side of the mixing head **37**. The mold **39** includes, as shown in FIG. **4**, an upper die **39a** for molding the upper face of the resin molded member **3**, a lower die **39b** for molding the lower face thereof, and a sliding die **39c** for molding the outer peripheral face thereof. The upper die **39a** and the lower die **39b** hold the glass panel **2** and the support member **4**. The upper die **39a** and the lower die **39b** are moved vertically so as to separate from each other while the sliding die **39c** is moved in the transverse direction of the resin molded member **3** so as to separate from the upper die **39a** and the lower die **39b**. A cavity (not shown) for molding the resin molded member **3** around the glass panel **2** is formed in the mold **39**. The cavity communicates with the injection portion of the mixing head **37**. The mold **39** is provided with a heater for heating the molded faces.

The polyol in the polyol tank **31** is sent to the mixing head **37** through the first switching valve **35** by the first liquid sending pump **33**. As well, the isocyanate in the isocyanate tank **32** is sent to the mixing head **37** through the second switching valve **36** by the second liquid sending pump **34**. The polyol and the isocyanate sent to the mixing head **37** are mixed and agitated in the mixing head **37**, and the thus mixed material is injected into the cavity of the mold **39**.

In the case where the polyol is not sent to the mixing head **37**, the first switching valve **35** is operated so as to return the polyol sent from the first liquid sending pump **33** to the polyol tank **31**. As well, in the case where the isocyanate is not sent to the mixing head **37**, the second switching valve **36** is operated similarly.

A scheme for molding the resin molded member **3** by the above molding apparatus **30** will be described next. Referring first to the polyurethane materials, the main component of the polyol is polyether polyol while the other hand the main component of the isocyanate is denatured isophorone diisocyanate. The components of the polyurethane materials may be selected arbitrarily.

When the polyurethane materials with no foaming agent dissolved are mixed in the mixing head **37** and is then molded, polyurethane in a non-foamy state is obtained. The specific gravities of the polyol and the isocyanate are set so that the polyurethane in the non-foamy state has a specific gravity of 1.05.

The inside temperature of the isocyanate tank **32** is kept at approximately 40°C by the heater. The isocyanate is heated at approximately 40°C in the isocyanate tank **32**. The inside temperature of the isocyanate tank **32** can be set higher or lower than 40°C.

The volume ratio of the carbonic acid gas to the nitrogen gas in the isocyanate tank **32** is changeable by adjusting the introduction pressures of the carbonic acid gas and the nitrogen gas to the isocyanate tank **32**. Each change of the introduction pressures of the carbonic acid gas and the nitrogen gas adjusts the inside pressure of the isocyanate tank **32**. In the present embodiment, the inside pressure of the isocyanate tank **32** is set at approximately 0.3 MPa.

When the carbonic acid gas and the nitrogen gas in the isocyanate tank **32** are pressurized and the isocyanate in the tank **32** is agitated by the agitator **41**, the carbonic acid gas and the nitrogen gas are mixed with and dissolved into the isocyanate. The amount of the dissolved carbonic acid gas is changeable by adjusting the introduction pressure thereof to the isocyanate tank **32**. Specifically, the higher the introduction pressure of the carbonic acid gas becomes, the larger the amount of the dissolved carbonic acid gas, and vise versa. Namely, the dissolved amount is in proportion to the introduction pressure substantially. As well, the amount of the dissolved nitrogen gas is in proportion to the introduction pressure of the nitrogen gas. The larger the dissolved amounts of the carbonic acid gas and the nitrogen gas, the more babbles are formed in the resin molded member **3** to lower the specific gravity of the resin molded member **3**.

The nitrogen gas is less dissolved than the carbonic acid gas into the polyurethane material. Specifically, the amount of the nitrogen gas dissolved in isocyanate when only the nitrogen gas at a predetermined pressure is introduced in the isocyanate tank is approximately 1/5 of the amount of the carbonic acid gas dissolved in isocyanate when only the carbonic acid gas at the same pressure is introduced in the isocyanate tank.

Suppose accordingly that the introduction pressures of the carbonic acid gas and the nitrogen gas are changed with the inside pressure of the isocyanate tank **32** set at a given value. The total amount of the foaming agents dissolved in the isocyanate increases as the introduction pressure of the carbonic acid gas is increased while the introduction pressure of the nitrogen as is reduced. In reverse, the total amount of the foaming agents dissolved in the isocyanate decreases as the introduction pressure of the carbonic acid gas is reduced while the introduction pressure of the nitrogen gas is increased. Namely, when the introduction pressures of the carbonic acid gas and the nitrogen gas are changed with the inside pressure of the isocyanate tank **32** kept constant to change the foaming degree of the resin molded member **2**, resin molded members **2** having specific gravities different from each other can be obtained. In the case where it is required, according to the property of the first liquid sending pump **34** and the like, to sent the isocyanate to the first liquid sending pump **34** with it pressurized at a predetermined pressure or higher by pressurizing the inside pressure of the isocyanate tank **32**, resin molded members **2** having specific gravities different from each other can be obtained by changing the introduction pressures of the carbonic acid gas and the nitrogen gas as described above with the inside pressure of the isocyanate tank **32** kept at the predetermined pressure or higher.

On the other hand, the inside temperature of the polyol tank **31** is kept by the heater at approximately 40°C, which is equal to the inside temperature of the isocyanate tank **32**. The polyol is heated at approximately 40°C in the polyol tank. The inside temperature of the isocyanate tank **32** can be set higher or lower than 40°C. The introduction pressure of the nitrogen gas to the polyol tank **31** is set so that the inside pressure of the polyol tank **31** is substantially equal to that of the isocyanate tank **32**, which is approximately 0.3 MPa. The temperature of the molding face of the mold **39** is kept in the range between approximately 90°C and 100°C by the heater. The temperature of the molding face of the mold **39** is changeable arbitrarily.

The first switching valve **35** and the second switching valve **36** are operated to send the polyol and the isocyanate, respectively, to the mixing head **37**. The volumes of the polyol and the isocyanate are set substantially equal to each other. The polyol and the isocyanate are agitated and mixed completely with each other in the mixing head **37** to be a mixed material. Agitation in this point allows the foaming agents dissolved in the isocyanate and the polyol to spread throughout the mixed material. Thereafter, the mixed material is injected into the cavity of the mold **39** from the mixing head **37**. The injection pressure at this time point is adjusted by the first and second liquid sending pumps **33**, **34** and is in the range between approximately 12 MPa and 14 MPa.

In the mixed material injected in the cavity, the carbonic acid gas and the nitrogen gas start foaming. Foaming in the mixed material allows the mixed material to spread to every corner of the cavity and between the glass panel **2** and the support member **4**. The thus spreading mixed material is solidified gradually.

When the mixed material injected in the cavity comes in contact with the molding face of the mold **39**, the glass panel **2**, and the support member **4**, babbles are broken at the contact parts. This smoothes the outer face of the resin molded member **3** with no babble formed, attaining excellent appearance of the resin molded member **3** even without performing coating or surface treatment. As well, the face of the resin molded member **3** which is in contact with the glass panel **2** or the support member **4** becomes smooth with no babbles formed, thereby attaining sufficiently high adhesion strength between the resin molded member **3** and the glass panel **2** and between the resin molded member **3** and the support member **4**. Moreover, solidification of the mixed material in the cavity insert-molds the support member **4** in the resin molded member 3, thereby integrating the support member **4** with the glass panel **2.**

Subsequently, the mold **39** is opened. Though a part of the sliding die **39c** which molds the trench **9** is in an undercut form, as shown in FIG. **4,** a part of the resin molded member **9** which is located in the vicinity of the trench **9** is elastically deformed at mold opening so that the mold **39** can be opened easily.

Description will be given next with reference to FIG. **5** about the relationship between the amount of the foaming agents dissolved in the isocyanate and the specific gravity of the resin molded member **3** molded with the use of the isocyanate in which the foaming agents are dissolved. As described above, the specific gravity of the polyurethane in the non-foamy state is 1.05. As each amount of the foaming agents dissolved in the isocyanate and the polyol is increased, the specific gravity of the resin molded member **3** decreases in proportion substantially.

When the specific gravity of the resin molded member **3** is smaller than 55 % of that of the polyurethane in the non-foamy state, babbles in the resin molded member **3** get together and start growing large to form vacancies in the resin molded member **3.** The vacancies significantly reduce the mechanical strength of the resin molded member **3.** Therefore, the amounts of the carbonic acid gas and the nitrogen gas dissolved in the isocyanate and the amount of the nitrogen gas dissolved in the polyol are set so that the specific gravity of the resin molded member **3** is equal to 55 % or larger of that of the polyurethane in the non-foamy state.

Description will be given next with reference to FIG. **6** about the relationship between the specific gravity and the Shore hardness of the resin molded member **3.** The babble content of the resin molded member **6** increases as each amount of the carbonic acid gas and the nitrogen gas dissolved in the isocyanate and the amount of the nitrogen gas dissolved in the polyol are increased, resulting in lowering of the Shore hardness, that is, the mechanical strength. The Shore hardness of the polyurethane in the non-foamy state is 96. The Shore hardness of the resin molded member **3** is 94 or 85 when the specific gravity thereof is 90 % or 55 % of that of the polyurethane in the non-foamy state, respectively. As can be cleared from the graph, the specific gravity and the hardness of the resin molded member **3** fall in a proportional relationship substantially.

When the specific gravity of the resin molded member **3** is smaller than 55 % of that of the polyurethane in the non-foamy state, the resin molded member **3** has a Shore hardness of 84 or smaller to be liable to be deformed. If the resin molded member **3** of the roof panel **1** mounted at a vehicle is liable to be deformed, the weather strip **8** is hard to be held at the predetermined position to less secure its sealability between the periphery of the opening **Y** of the roof **R** and the periphery of the roof panel **1.** In view of the above, it is preferable to set the specific gravity of the resin molded member **3** at 55 % or higher of that of the polyurethane in the non-foamy state, preferably, 0.60 or larger. When the specific gravity of the resin molded member **3** is set at 90 % or smaller of that of the polyurethane in the non-foamy state, the weight of the resin molded member **3** can be reduced nearly 10 % of the polyurethane in the non-foamy state. In view of this, the specific gravity of the resin molded member **3** is set at 90 % or smaller of that of the polyurethane in the non-foamy state, preferably 0.90 or smaller.

As described above, in the vehicle roof panel **1** in accordance with the present embodiment, the specific gravity of the resin molded member **3** is set at 0.90 or smaller to reduce the weight of the resin molded member **3,** thereby achieving weight reduction of the roof panel **1.** Weight reduction of the roof panel **1** leads to improvement on the fuel efficiency to suppress adverse influence of the vehicle on the grovel environment.

Further, the resin molded member **3** made of polyurethane having high mechanical strength is formed integrally with the glass panel **2** and is set to have a specific gravity of 0.60 or larger, thereby maintaining the form of the resin molded member **3.** Since the resin molded member **3** is a foam, the amount of polyurethane required for molding the resin molded member **3** is reduced to lead to reduction in cost of the roof panel **1.**

Moreover, the form of the resin molded member **3** can be maintained as described above, so that the weather strip **8** can be held at the predetermined position to attain secured sealing between the periphery of the opening **Y** of the roof **R** and the periphery of the roof panel **R.**

Furthermore, in molding the resin molded member **3,** the mixed material having excellent moldability spreads readily to every part of the cavity of the mold **39,** thereby improving the dimensional accuracy of the resin molded member **3.** As a result, the dimensional accuracy of the trench **9** increases to eliminate the need to perform mechanical processing for attaining the accurate form of the trench **9** after molding the resin molded member **3,** resulting in reduction of the processing cost and the equipment cost. With the excellent moldability, the mixed material can spread between the grass panel **2** and the support member **4** to attain definite integration of the support member **4** with the glass panel **2.**

When the foaming degree of the mixed material is set low, the expansion rate lowers with a result that the mixed material less spreads to any part of the cavity while on the other hand the mechanical strength of the resin molded member **3** increases to attain high dimensional accuracy. In contrast, when the foaming degree of the mixed material is set high, the expansion rate increases with a result that the mixed material readily spreads to every part of the cavity while on the other hand the mechanical strength of the resin molded member **3** lowers to invite lowering of the dimensional accuracy. The moldability of the mixed material and the dimensional accuracy of the resin molded member **3** can be set according to each amount of the foaming agents dissolved in the mixed material. When each amount of the foaming agents dissolved in the mixed material is set so that the specific gravity of the resin molded member **3** falls in the above range, the dimensional accuracy of the resin molded member **3** increases while at the same time the moldability remains at an excellent degree.

In the present embodiment, the resin molded member **3** is elastically deformed when the sliding die **39c** is moved in opening the mold **39**, enabling simplification of the configuration of the sliding die **39c**. The specific gravity of the resin molded member **3** is set within the above range to allow the resin molded member **3** to be deformed more readily than the polyurethane in the non-foamy state, thereby preventing the resin molded member **3** from being damaged in moving the sliding die **39c**.

Even in the case where the glass panel **1** is large and occupies substantially the entirety of the roof **R**, molding failure can be suppressed because the mixed material readily spreads to every part of the cavity, as described above.

The foaming agents are dissolved in the mixed material to allow the mixed material to have high flowability so that the mixed material readily flows into the cavity in molding. Accordingly, even in the where the glass panel **2** is large and the cavity extends long, the case where the peripheral part of the glass panel **2** is complicated in form, the case where the resin molded member **3** has a small area in section, and therefore, the cavity is small and narrow, or so, the mixed material can spread to every part of the cavity readily and definitely to thus suppress molding failure of the resin molded member **3**

The support member **4** supporting the glass panel **2** to the vehicle is insert-molded in the resin molded member **3** to eliminate the need for components for fixing the support member **4** to the glass panel **2** and the like, thereby suppressing an increase in the number of components and reducing a step for manufacturing the roof panel **1**.

In addition, the carbonic acid gas and the nitrogen gas are used as the foaming agents, so that micro babbles can be formed substantially equably in the resin molded member **3** when compared with a case using water and the like as the foaming agent, with a result that the mechanical strength of the resin molded member **3** is substantially uniform entirely.

The present embodiment refers to the case where the resin molded member **3** is molded integrally with the glass panel **2** around the entire periphery thereof, but the form and the molded position of the resin molded member **3** are not limited thereto. The resin molded member **3** may be molded integrally with only a part of the periphery of the glass panel **2** or be molded integrally with only the lower face of the glass panel **2**. Further, the resin molded member **3** may have a form covering the glass panel **2** for improving the appearance or a form serving as a protection member for preventing passengers from touching the glass panel **2**.

Further in the present embodiment, the roof panel **1** opens/closes the opening **Y** formed in the roof **R**, but may be so formed as to compose substantially the entirety of the roof as in a case of an open car, for example.

Moreover, though the support member **4** is insert-molded in the resin molded member **3** in the present embodiment, it may be mounted to the resin molded member **3** after being molded separately from the resin molded member **3**. In this case, when a receiving portion into which a part of the support member **4** is fitted is formed in the resin molded member **3** and the part of the support member **4** is fitted and fixed into this receiving portion, the support member **4** is made integral with the glass panel **2** easily. This receiving portion may be in a form of, for example, a trench, a recess, or the like to which the support member **4** can be inserted. A part of the support member **4** may be fitted in the receiving portion of the resin molded member **2** while the other part thereof is fixed to the glass panel **2**.

Furthermore, though the present embodiment refers to the case where the glass panel **2** serves as the first member of the present invention, the first member may be a metal-made panel, a resin-made panel, or the like, for example.

Only the carbonic acid gas may be introduced to the polyol tank **31** for dissolving only the carbonic acid gas in the polyol, or both the carbonic acid gas and the nitrogen gas may be introduced into the polyol tank **31** for dissolving both of them into the polyol. As well, only the carbonic acid gas may be introduced to the isocyanate tank **32** for dissolving only the carbonic acid gas in the isocyanate, or only the nitrogen gas may be introduced to the isocyanate tank **32** for dissolving only the nitrogen gas in the isocyanate.

The foaming agents may be any gaseous foaming agent which can be dissolved in a thermosetting resin material, rather than the carbonic acid gas and the nitrogen gas.

### Industrial Applicability

As described above, the vehicle roof panel in accordance with the present invention is applicable to sliding type roof panels for opening/closing an opening formed in a roof, for example.

## Claims

1. A vehicle roof panel comprising:
a panel-shaped first member formed so as to cover an upper part of a cabin of a vehicle and serving as an outer panel of the vehicle; and
a second member made of a foam of thermosetting resin and molded integrally with the first member,
wherein a specific gravity of the second member is set in a range between 55 % and 90 %, both inclusive, of a specific gravity of the thermosetting resin, which composes the second member, in a non-foamy state.

2. The vehicle roof panel of Claim 1,
wherein the thermosetting resin is polyurethane, and
the specific gravity of the second member is set within a range between 0.60 and 0.90, both inclusive.

3. The vehicle roof panel of Claim 1,
wherein the second member is molded so as to surround the periphery of the first member, and
a sealing part receiving portion in which a sealing member in contact with the periphery of an opening formed in a roof of the vehicle is fitted is formed in the second member.

4. The vehicle roof panel of Claim 3,
wherein the sealing member receiving portion is molded by a mold for molding the second member.

5. The vehicle roof panel of Claim 1, further comprising:
a support member supporting the first member to the vehicle and arranged below the first member, a part of the support member being insert-molded in the first member.

6. The vehicle roof panel of Claim 1, further comprising:
a support member supporting the first member to the vehicle and arranged below the first member,
wherein a receiving portion in which a part of the support member is fitted and fixed is formed in the second member.

7. The vehicle roof panel of Claim 1,
wherein the second member is molded by reaction-injection-molding a thermosetting resin material in which at least one of a carbonic acid gas and a nitrogen gas is dissolved.
